# EUROPEAN PATENT APPLICATION

(11) **EP 4 664 999 A1**
(43) Date of publication of application: **17.12.2025**
(21) Application number: 23921232.7
(22) Date of filing: 22.03.2023
(51) Int. Cl.: H04W 48/02, H04W 48/08, H04W 84/06

(54) **EASING OF RESTRICTIONS ON ROAMING CONNECTION AT NORMAL TIMES**

(30) Priority: 06.02.2023 JP 2023015961
(71) Applicant: Rakuten Mobile, Inc., Tokyo 158-0094 (JP)
(72) Inventor: AOYAGI Kenichiro, Tokyo 158-0094 (JP)
(74) Representative: Betten & Resch
(86) International application number: PCT/JP2023/011113
(87) International publication number: WO 2024/166404

(57) **Abstract**

A communication control apparatus includes a processor that performs: by a roaming restriction area setter, setting a roaming restriction area in which roaming connection is restricted during normal time and roaming connection is allowed during emergency; and by a roaming restriction easer, easing the restriction on roaming connection during normal time for a specific communication cell included in the roaming restriction area. The roaming restriction area includes a plurality of communication cells. The roaming restriction area includes a terrestrial communication cell provided on the ground by a terrestrial base station installed on the ground and a non-terrestrial communication cell provided on the ground by a flying non-terrestrial base station, and the roaming restriction easer eases the restriction on roaming connection during normal time for the non-terrestrial communication cell included in the roaming restriction area. The non-terrestrial base station is a communication satellite flying in outer space.

## Description

### BACKGROUND OF THE INVENTION

### 1. Field of the Invention

The present disclosure relates to easing restriction on roaming connection during normal time.

### 2. Description of the Related Art

The number, types, and applications of wireless communication devices (hereinafter also collectively referred to as communication device(s)), represented by smartphones and Internet of Things (IoT) devices, continue to increase, and wireless communication standards continue to be expanded and improved. For example, the commercial service of the fifth generation mobile communication system known as "5G" started in 2018, and the standards are still being developed by the 3GPP (Third Generation Partnership Project). Efforts are also underway to develop standards for "6G" or the sixth generation mobile communication system, which would be the next generation of wireless communication standards following 5G.

Patent Literature 1 discloses network selection technology for so-called disaster roaming. In the disaster roaming, a roaming connection to a specific roaming network is allowed only when the home network becomes unavailable during a disaster. In normal time, a roaming connection to such specific roaming network is prohibited.

Patent Literature 1: US Patent Application Publication 2022/0264275

### SUMMARY OF THE INVENTION

The connection setting for the disaster roaming is rigid, and even if there are sufficient communication resources available for roaming communication in the roaming network, they are not utilized and wasted during normal time.

The present disclosure was made in consideration of this situation, and it provides a communication control apparatus and the like that can ease the restriction on roaming connection during normal time.

A communication control apparatus in a certain aspect of the present disclosure includes at least one processor that performs: by a roaming restriction area setter, setting a roaming restriction area in which roaming connection is restricted during normal time and roaming connection is allowed during emergency; and by a roaming restriction easer, easing the restriction on roaming connection during normal time for a specific communication cell included in the roaming restriction area.

According to the present aspect, the restriction on roaming connection during normal time can be eased, for a specific communication cell included in a roaming restriction area in which roaming connection is restricted except during emergency.

Another aspect of the present disclosure is a communication control method. The communication control method performs: setting a roaming restriction area in which roaming connection is restricted during normal time and roaming connection is allowed during emergency; and easing the restriction on roaming connection during normal time for a specific communication cell included in the roaming restriction area.

Further another aspect of the present disclosure is a computer-readable medium. The computer-readable medium stores a communication control program causing a computer to perform: setting a roaming restriction area in which roaming connection is restricted during normal time and roaming connection is allowed during emergency; and easing the restriction on roaming connection during normal time for a specific communication cell included in the roaming restriction area.

In addition, any combination of the above components, and any conversion of the expression of the present disclosure among methods, devices, systems, storage media, computer programs and the like are also encompassed within the present disclosure.

According to the present disclosure, the restriction on roaming connection during normal time can be eased.

### BRIEF DESCRIPTION OF THE DRAWINGS

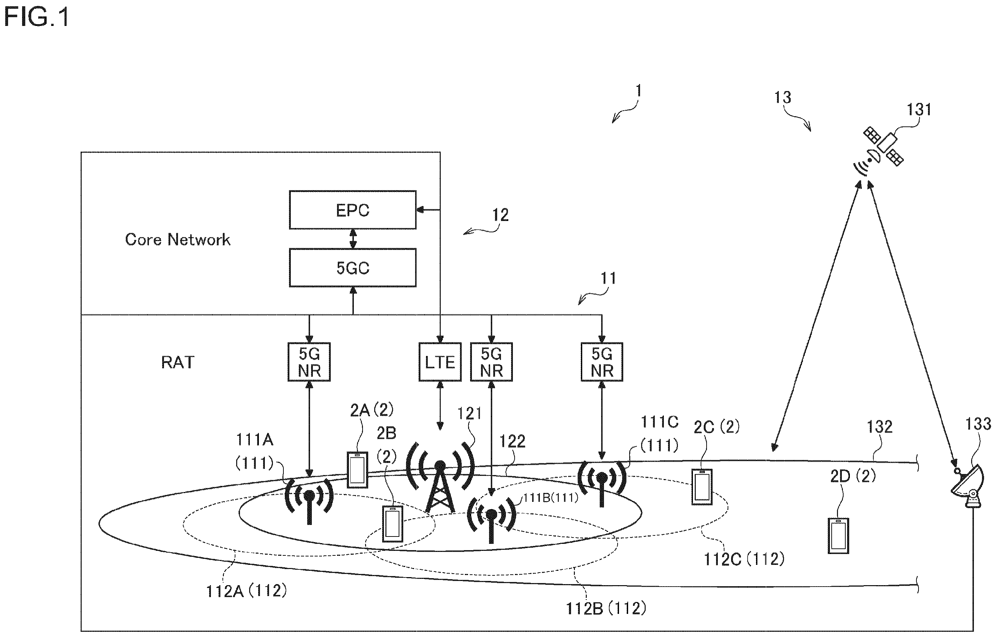

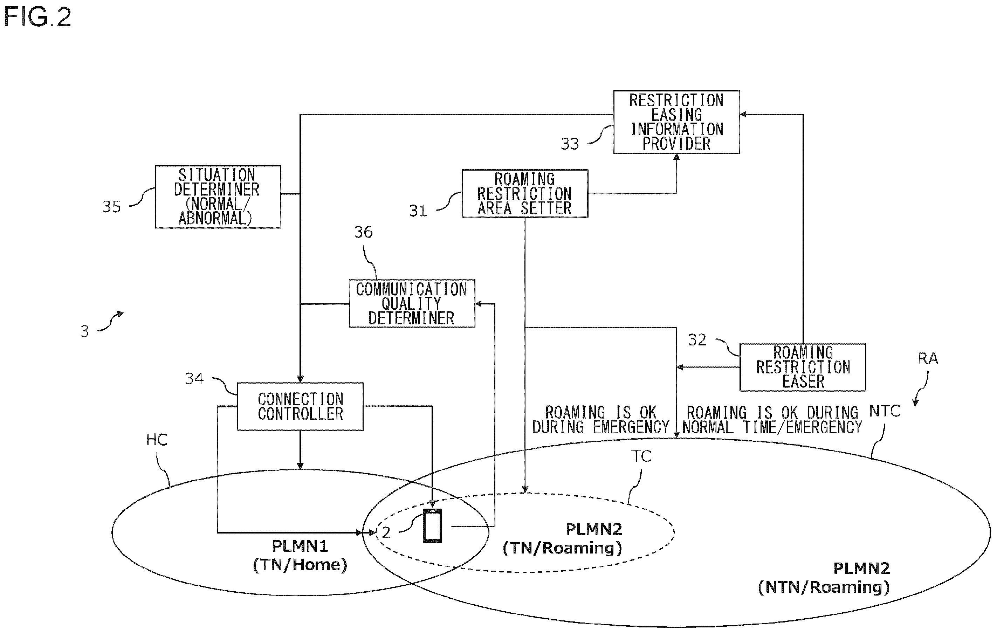

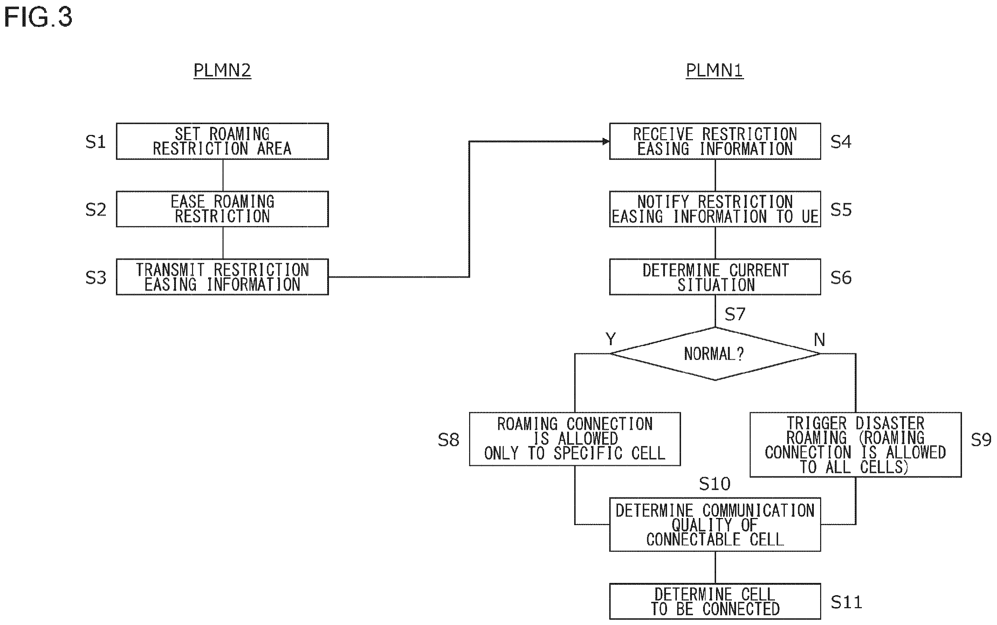

Figure 1 schematically shows the overview of a wireless communication system to which the communication control apparatus is applied. Figure 2 is a schematic functional block diagram of the communication control apparatus. Figure 3 is a flowchart showing an example of communication control by the communication control apparatus.

### DETAILED DESCRIPTION OF THE INVENTION

The following is a detailed description of ways for implementing the present disclosure (hereinafter also referred to as embodiment), with reference to the drawings. In the description and/or the drawings, identical or equivalent components, parts, processes, and the like will be given the same symbol and duplicate descriptions will be omitted. The scale or shape of each portion shown in the drawings is set for convenience in order to simplify the description, and is not to be construed as limiting unless otherwise mentioned. The embodiments are illustrative and will not limit the coverage of the present disclosure in any way. Not all features presented in the embodiments or combinations thereof are necessarily essential to the present disclosure. For convenience, the embodiments are presented broken down into each component to realize each function and/or each group of functions. However, one component in an embodiment may actually be realized by a combination of a plurality of separate components, or a plurality of components in an embodiment may actually be realized by a single united component.

The communication control apparatus according to the present embodiment can be applied to a terrestrial network (TN) constructed by terrestrial communication cells provided on the ground by terrestrial base stations installed on the ground, a non-terrestrial network (NTN) constructed by non-terrestrial communication cells provided on the ground by flying non-terrestrial base stations, or a network where a TN and an NTN coexist. Such base stations and/or communication cells may belong to the same mobile communication network, Public Land Mobile Network (PLMN), Mobile Network Operator (MNO) and/or Mobile Virtual Network Operator (MVNO), or belong to different mobile communication networks, PLMNs, MNOs and/or MVNOs. In the following, mobile communication networks, PLMNs, MNOs and MVNOs are collectively referred to as PLMNs.

Figure 1 schematically shows an overview of a wireless communication system 1 to which the communication control apparatus according to an embodiment of the present disclosure is applied. The wireless communication system 1 includes 5G wireless communication system 11, 4G wireless communication system 12, and satellite communication system 13. 5G wireless communication system 11 that complies with the fifth generation mobile communication system (5G) uses NR (New Radio) or 5G NR (Fifth Generation New Radio) as the radio access technology (RAT) and 5GC (Fifth Generation Core) as the core network (CN). 4G wireless communication system 12 that complies with the fourth generation mobile communication system (4G) uses LTE (Long Term Evolution) or LTE-Advanced as the radio access technology and EPC (Evolved Packet Core) as the core network. Satellite communication system 13 is responsible for satellite communication via communication satellite 131. Although not shown in the figure, the wireless communication system 1 may include wireless communication networks of a generation prior to 4G, a generation later than 5G (e.g., 6G), or any wireless communication networks that are not associated with generations, such as Wi-Fi (registered trademark). Besides, the wireless communication system 1 may not include some or all of the 5G wireless communication system 11, the 4G wireless communication system 12, and the satellite communication system 13.

The 5G wireless communication system 11 may include a plurality of 5G base stations 111A, 111B, and 111C (hereinafter also collectively referred to as 5G base station 111) installed on the ground capable of communicating by 5G NR with communication devices 2A, 2B, 2C, and 2D (hereinafter also collectively referred to as communication device(s) 2) such as smartphones, which are also referred to as UE (User Equipment). 5G base station 111 is also referred to as gNodeB (gNB). The coverage or support range of each 5G base station 111A, 111B and 111C is referred to as a cell 112A, 112B and 112C (hereinafter also collectively referred to as 5G cell 112).

The size of the 5G cell 112 of each 5G base station 111 is arbitrary, but typically ranges from a few meters to several tens of kilometers in radius. Although there is no established definition, cells with a radius of a few meters to ten meters are called femtocells, cells with a radius of ten meters to several tens of meters are called picocells, cells with a radius of several tens of meters to several hundred meters are called microcells, and cells with a radius of more than several hundreds of meters are called macrocells. In 5G, high frequency radio waves such as millimeter waves are often used, and their high tendency to propagate in a straight-line causes radio waves to be blocked by obstacles, shortening the communication distance. For this reason, 5G tends to use more small cells than 4G and earlier generations.

The communication device 2 can conduct 5G communication when it is located within at least one of a plurality of 5G cells 112A, 112B and 112C. In the example shown in the figure, communication device 2B in 5G cells 112A and 112B can communicate with both 5G base stations 111A and 111B by 5G NR. In addition, the communication device 2C in the 5G cell 112C can communicate with the 5G base station 111C by 5G NR. Communication device 2A and 2D are outside of all 5G cells 112A, 112B and 112C, so they are not able to communicate by 5G NR. The 5G NR-based 5G communication between each communication device 2 and each 5G base station 111 is managed by the 5GC, which is the core network. For example, the 5GC transfers data to and from each 5G base station 111, transfers data to and from external networks such as the EPC, the satellite communication system 13 and the Internet, and manages the movement of the communication device 2.

The 4G wireless communication system 12 includes a plurality of 4G base stations 121 (only one of them is shown in Figure 1). The plurality of 4G base stations 121 are installed on the ground and can communicate with the communication device 2 by LTE or LTE-Advanced. The base station 121 in 4G is referred to as eNodeB (eNB). Similar to each 5G base station 111, the communication range or support range of each 4G base station 121 is also called a cell and is shown as 122.

The communication device 2 can conduct 4G communication when it is located within 4G cell 122. In the example shown in the figure, the communication devices 2A and 2B in the 4G cell 122 can communicate with the 4G base station 121 by LTE or LTE-Advanced. Communication device 2C and 2D are outside the 4G cell 122 and are not able to communicate by LTE or LTE-Advanced. The 4G communication by LTE and LTE-Advanced between each communication device 2 and each 4G base station 121 is managed by the EPC, which is the core network. For example, the EPC manages the transfer of data to and from each 4G base station 121, the transfer of data to and from external networks such as 5GC, the satellite communication system 13 and the Internet, and the movement management of the communication device 2.

If we take a look at each communication device 2A, 2B, 2C and 2D in the example shown in the figure, the communication device 2A is in a state that enables 4G communication with 4G base station 121, and communication device 2B is in a state that enables 5G communication with 5G base stations 111A and 111B and 4G communication with 4G base station 121, and communication device 2C is in a state that enables 5G communication with 5G base station 111C. When there are multiple base stations (111A, 111B and 121) as in the case of communication device 2B, one base station is selected as the most suitable for the communication device 2B in terms of communication quality and the like, under the control of the 5GC and/or the EPC, which is the core network. For the communication device 2D that is not in a state that enables 5G communication with any 5G base station 111 or 4G communication with any 4G base station 121, the communication is conducted using the satellite communication system 13 described below.

The satellite communication system 13 is the wireless communication system using communication satellites 131 as non-terrestrial base stations. The communication satellites 131 are low-earth-orbit satellites flying in low-earth-orbit outer space of 500 to 700 km above the ground. Similar to 5G base station 111 and 4G base station 121, the communication range or support range of each communication satellite 131 is also called a cell and is shown as 132. Thus, a communication satellite 131 as a non-terrestrial base station provides a satellite communication cell 132 as a non-terrestrial communication cell onto the ground. Communication device 2 on the ground can conduct satellite communication when it is inside the satellite communication cell 132. Similar to 5G base station 111 in the 5G wireless communication system 11 and 4G base station 121 in the 4G wireless communication system 12, communication satellite 131 as the base station in the satellite communication system 13 is capable of wireless communication directly or indirectly via aircraft and the like with the communication device 2 within the satellite communication cell 132. The radio access technology used by the communication satellite 131 for wireless communication with the communication device 2 in the satellite communication cell 132 may be 5G NR, the same as the 5G base station 111, or LTE or LTE-Advanced, the same as the 4G base station 121, or any other radio access technology that the communication device 2 can use. Therefore, there is no need for the communication device 2 to have any special functions or components for satellite communication.

The satellite communication system 13 is equipped with a gateway 133 as a ground station that is installed on the ground and can communicate with the communication satellite 131. The gateway 133 is equipped with a satellite antenna to communicate with the communication satellite 131, and is connected to the 5G base station 111 and/or the 4G base station 121 as terrestrial base stations that constitute the terrestrial network (TN), via 5G NR and/or LTE as the respective radio access technologies or other wired or wireless access technologies or interfaces. In such a way, the gateway 133 connects the non-terrestrial network (NTN), which includes the communication satellite 131 as a non-terrestrial base station or a satellite base station, and the terrestrial network (TN), which includes terrestrial base station 111, 121, for mutual communication. When the communication satellite 131 conducts 5G communication with the communication device 2 in the satellite communication cell 132 by 5G NR, the 5GC connected via the gateway 133 and the 5G base station 111 in the TN (or the 5G radio access network) is used as the core network. When the communication satellite 131 conducts 4G communication with the communication device 2 in the satellite communication cell 132 by LTE or LTE-Advanced, the EPC connected via the gateway 133 and the 4G base station 121 in the TN (or the 4G radio access network) is used as the core network. In such a way, appropriate coordination is made between different wireless communication systems such as 5G wireless communication system 11, 4G wireless communication system 12, satellite communication system 13 and the like through the gateway 133.

Satellite communication by communication satellites 131 is mainly used for covering areas with no or few terrestrial base stations such as 5G base stations 111 and 4G base stations 121 and the like. In the example shown in the figure, a communication device 2D that is outside the communication cells of all the terrestrial base stations communicates with the communication satellite 131. On the other hand, communication devices 2A, 2B and 2C that are in good communication with either of the terrestrial base stations, are also in the satellite communication cell 132 and can communicate with the communication satellite 131. However, by communicating with the terrestrial base stations instead of the communication satellite 131 as the satellite base station in principle, the limited communication resources (including power) of the communication satellite 131 are saved for the communication device 2D and the like. The communication satellite 131 uses beamforming to direct the communication radio wave to the communication device 2D in the satellite communication cell 132, thereby the communication quality with the communication device 2D is improved.

The size of the satellite communication cell 132 of the communication satellite 131 as a satellite base station depends on the number of beams emitted by the communication satellite 131. For example, a satellite communication cell 132 with a diameter of about 24 km can be formed by combining up to 2,800 beams. As illustrated, a satellite communication cell 132 is typically larger than a terrestrial communication cell such as a 5G cell 112 or a 4G cell 122, and could contain one or more 5G cells 112 and/or 4G cells 122 inside it. The above example shows a communication satellite 131 flying in low-earth-orbit outer space at a height of about 500 km to 700 km above the ground as a flying non-terrestrial base station. However, a communication satellite flying in geostationary orbit or other higher orbit in outer space, or an unmanned or manned aircraft or a drone flying in stratosphere or other lower (e.g., about 20 km above the ground) atmosphere may be used as a non-terrestrial base station in addition to or instead of the communication satellite 131.

Figure 2 is a functional block diagram schematically showing the communication control apparatus 3 according to the present embodiment. The communication control apparatus 3 includes a roaming restriction area setter 31, a roaming restriction easer 32, a restriction easing information provider 33, a connection controller 34, a situation determiner 35, a communication quality determiner 36. Some of such functional blocks can be omitted as long as the communication control apparatus 3 realizes at least some of the operations and/or effects described below. Such functional blocks are realized by the cooperation of hardware resources, such as the central processing unit, memory, input devices, output devices, and peripheral devices connected to the computer, and software that is executed using them. Regardless of the type of computer or its installation location, each of the above functional blocks may be realized with the hardware resources of a single computer, or by combining hardware resources distributed across multiple computers.

Especially in the present embodiment, some or all of the functional blocks of the communication control apparatus 3 may be realized in a centralized or distributed manner by computer and/or processor provided in the communication device 2, the RAN including the base station 111, 121, 131, the gateway 133, or the core network. including the communication device 2. As described below, in the present embodiment, PLMN1 (first network), which is the home network for a specific communication device 2, and PLMN2 (second network), which is the roaming network for such communication device 2, are exemplified. In such an example, the roaming restriction area setter 31, the roaming restriction easer 32, and the restriction easing information provider 33 are preferably provided on the PLMN2 side (e.g., in the core network and/or the RAN of the PLMN2) (however, some or all of them may be provided on the PLMN1 side and/or in the communication device 2), and the connection controller 34, the situation determiner 35, and the communication quality determiner 36 are preferably provided on the PLMN1 side (e.g., in the core network and/or the RAN of the PLMN1) (however, some or all of them may be provided on the PLMN2 side and/or in the communication device 2)

In the present embodiment, the communication control or the connection control of the communication device 2 shown in the figure by the communication control apparatus 3 is specifically illustrated. The communication device 2 is the UE whose home network is the PLMN1 as the first network. That is, the user or the administrator of the communication device 2 (hereinafter also collectively referred to as user) has a contract for the communication service with the first communication carrier, which is the MNO or the MVNO that operates the PLMN1. In principle, the communication device 2 communicates by being connected to a base station and/or a communication cell that belongs to the PLMN1 as the home network.

The PLMN2 as the second network is operated by the second communication carrier, which is the MNO or the MVNO different from the first communication carrier. Under an alliance or an agreement between the first communication carrier and the second communication carrier, the communication service can be provided to the communication device 2 that has the contract with the first communication carrier, also from the PLMN2 with which it does not have a contract. Typically, the PLMN2 as the roaming network or an alternative to the PLMN1, provides the communication service to the communication device 2, when there is no communication cell of the PLMN1 as the home network at the current location of the communication device 2 or when the communication quality by the PLMN1 is insufficient.

In Figure 2, one communication cell (e.g., a terrestrial communication cell) or a home cell HC that belongs to the PLMN1 as the home network, and one terrestrial communication cell TC and one non-terrestrial communication cell NTC that belong to the PLMN2 as the roaming network are symbolically illustrated. The PLMN1 and/or the PLMN2 can include typically a large number of unshown communication cells. As described below, the communication control apparatus 3 switches the connection of the communication device 2 among the home cell HC, the terrestrial communication cell TC, and the non-terrestrial communication cell NTC, as appropriate according to the situation.

The roaming restriction area setter 31 sets a roaming restriction area RA in the PLMN2 as the roaming network, in which roaming connection is restricted during normal time and roaming connection is allowed during emergency. The roaming restriction area RA may be an area including only one communication cell that belongs to the PLMN2, but as shown in the example of the figure, it is preferably an area including a plurality of communication cells (e.g., the terrestrial communication cell TC and the non-terrestrial communication cell NTC) that belong to the PLMN2.

Even more preferably, the roaming restriction area setter 31 sets the roaming restriction area RA in the PLMN2 as the roaming network in units of tracking area or location registration area. Tracking areas are configured in order to track or detect the approximate location of the communication device 2. Each tracking area is typically constituted by a large number of base stations and/or communication cells. For example, one MNO in Japan covers the whole country by several tens of location registration areas.

As such, by setting a relatively large area such as a tracking area as the roaming restriction area RA, the roaming restriction area setter 31 allows roaming connection of the communication device 2 in such roaming restriction area RA only during abnormal time in principle. Therefore, during normal time that is not abnormal time or emergency, roaming connection of the communication device 2 to the terrestrial communication cell TC and the like, is restricted or prohibited in principle, under the assumption that communication service with sufficient quality is provided from the PLMN1 (e.g., the home cell HC) as the home network. The roaming restriction area setter 31 may be interpreted as a functional unit that performs the so-called disaster roaming setting for the roaming restriction area RA.

The roaming restriction easer 32 eases the restriction on roaming connection during normal time for a specific communication cell included in the roaming restriction area RA set by the roaming restriction area setter 31. For example, the roaming restriction easer 32 lifts the prohibition of roaming connection during normal time for a specific communication cell included in the roaming restriction area RA. In the example shown in the figure, the roaming restriction easer 32 eases the restriction on roaming connection during normal time for the non-terrestrial communication cell NTC (e.g., the satellite communication cell 132 provided by the communication satellite 131) included in the roaming restriction area RA as a tracking area.

The non-terrestrial communication cell NTC for which the restriction on roaming connection during normal time has been eased as above, allows roaming connection of the communication device 2 not only during emergency but also during normal time. However, the roaming restriction easer 32 may set a certain restriction or condition on roaming connection to the non-terrestrial communication cell NTC during normal time. Examples of such restriction or condition on roaming connection during normal time include: there are sufficient communication resources available for roaming communication in the non-terrestrial communication cell NTC; there is no home cell HC that can be connected by the communication device; the communication quality by the home cell HC is insufficient; roaming connection is allowed only during a specific time period; and roaming connection is allowed only in a specific area within the non-terrestrial communication cell NTC.

It should be noted that if a plurality of the non-terrestrial communication cells NTC are included in the roaming restriction area RA, the roaming restriction easer 32 may ease the restriction on roaming connection during normal time for all of the non-terrestrial communication cells NTC, or may ease the restriction on roaming connection during normal time for some of the non-terrestrial communication cells NTC. For the latter example, the roaming restriction easer 32 may ease the restriction on roaming connection during normal time (i.e., allow roaming connection during normal time) for the relatively wide satellite communication cell 132 provided by the communication satellite 131 flying in low-orbit outer space, while may not ease the restriction on roaming connection during normal time for the relatively narrow non-terrestrial communication cell NTC provided by an unmanned or manned aircraft or drone flying in the atmosphere. Conversely, the roaming restriction easer 32 may ease the restriction on roaming connection during normal time for the relatively narrow non-terrestrial communication cell NTC provided by the aircraft or the drone, while may not ease the restriction on roaming connection during normal time for the relatively wide satellite communication cell 132 provided by the communication satellite 131.

Besides, if a plurality of the terrestrial communication cells TC are included in the roaming restriction area RA, the roaming restriction easer 32 may ease the restriction on roaming connection during normal time for some or all of the terrestrial communication cells TC. For example, the roaming restriction easer 32 may ease the restriction on roaming connection during normal time (i.e., allow roaming connection during normal time) for the relatively wide macrocell and the like, while may not ease the restriction on roaming connection during normal time for the relatively narrow microcell, picocell, femtocell, and the like.

The roaming restriction easer 32 may ease the restriction on roaming connection during normal time for all or some of the communication cells included in the roaming restriction area RA set by the roaming restriction area setter 31 that use a specific radio access technology (RAT). For example, the roaming restriction easer 32 may ease the restriction on roaming connection during normal time (i.e., allow roaming connection during normal time) for all or some of the 4G cells 122 that use LTE or LTE-Advanced as the RAT or all or some of the satellite communication cells 132 that use a proprietary RAT in accordance with LTE, LTE-Advanced, NR, 5G NR, and the like, while may not ease the restriction on roaming connection during normal time for all or some of the 5G cells 112 that use NR or 5G NR as the RAT.

The restriction easing information provider 33 provides restriction easing information that can identify the specific communication cell (the non-terrestrial communication cell NTC in the illustrated example) for which the restriction on roaming connection during normal time has been eased by the roaming restriction easer 32, to the core network of the PLMN1 as the home network providing connection before roaming. For example, the restriction easing information provider 33 realized in the core network of the PLMN2 as the roaming network, may provide the PLMN1 with identification information (as the restriction easing information) such as the ID of the non-terrestrial communication cell NTC for which the restriction on roaming connection during normal time has been eased, or may provide the PLMN1 with identification information (as the restriction easing information) such as the ID of the terrestrial communication cell TC for which the restriction on roaming connection during normal time has not been eased (i.e., only the disaster roaming is allowed during emergency). In the latter case, the PLMN1 that has received the restriction easing information can indirectly recognize that the non-terrestrial communication cell NTC, not included in the list of communication cells in which only the disaster roaming is allowed, would allow roaming connection during normal time.

It is preferable for the restriction easing information provider 33 to provide the restriction easing information to the core network of the PLMN1 as the home network providing connection before roaming, in advance during normal time when there are no abnormalities such as disasters taking place. Such restriction easing information is referred to by the PLMN1 and/or the communication device 2 to realize the exceptional roaming connection during normal time. It should be noted that, during emergency, all the communication cells included in the roaming restriction area RA will allow roaming connection by the disaster roaming in principle, therefore the restriction easing information may not be referred to.

The connection controller 34 is responsible for connection control of the communication device 2. In the illustrated example, the connection controller 34 connects the communication device 2 to any of the home cell HC that belongs to the PLMN1 as the home network, or the terrestrial communication cell TC or the non-terrestrial communication cell NTC that belong to the PLMN2 as the roaming network. When determining where the communication device 2 should be connected, the connection controller 34 refers to at least one of: the restriction easing information provided from the restriction easing information provider 33; situation information provided by the situation determiner 35 described below; and communication quality information provided by the communication quality determiner 36 described below.

The situation determiner 35 determines the current situation in the PLMN1 as the home network. For example, the situation determiner 35 determines whether or not a disaster or an emergency is taking place that should trigger the disaster roaming for the PLMN1. The situation determiner 35 may determine the current situation in the PLMN1 based on presence or absence of a declaration concerning a disaster or an emergency taking place made by a public agency such as a country or local government, or may determine the current situation in the PLMN1 based on presence or absence of actual failure or abnormality in the PLMN1 caused by a disaster or an emergency. For example, the situation determiner 35 determines "emergency" when the PLMN1 as the home network is unable to provide communication service with sufficient quality to the communication device 2 due to a disaster or an emergency, and determines "normal time" when no disasters or emergencies are taking place, or when the PLMN1 is able to provide communication service with sufficient quality to the communication device 2 in spite of a disaster or an emergency taking place.

The communication quality determiner 36 determines the quality of the communication service provided by the PLMN1 as the home network to the communication device 2. In the example shown in the figure, the communication quality between the home cell HC that belongs to the PLMN1 and the communication device 2 is determined. For example, the communication quality between the home cell HC and the communication device 2 may be holistically determined, based on the strength of the radio wave or the accuracy of the reference signal from the communication device 2 measured at the unshown base station that provides the home cell HC, the strength of the radio wave or the accuracy of the reference signal from the unshown base station that provides the home cell HC measured at the communication device 2, or other various information known at the unshown base station that provides the home cell HC or the communication device 2 that may affect the communication quality.

The communication quality determiner 36 may determine the quality of the communication service provided by the PLMN2 as the roaming network to the communication device 2. In the illustrated example, the communication quality between the terrestrial communication cell TC that belongs to the PLMN2 and the communication device 2 or the communication quality between the non-terrestrial communication cell NTC that belongs to the PLMN2 and the communication device 2 may be determined. It should be noted that, in determining the communication quality between each of the home cell HC, the terrestrial communication cell TC, and the non-terrestrial communication cell NTC, the communication device 2 does not have to be connected to each of the communication cells. In a typical example, for a communication device 2 connected to the PLMN1 as the home network, the communication quality with the connected home cell HC may be accurately recognized, and the communication quality with the terrestrial communication cell TC or the non-terrestrial communication cell NTC as a candidate for switching or roaming may also be recognized. In such a case, the connection controller 34 can appropriately determine whether to switch or not and the communication cell for switching, based on the comparison of the communication quality in the connected home cell HC and the communication quality in a plurality of communication cells (e.g., the terrestrial communication cell TC and the non-terrestrial communication cell NTC) as candidates for switching.

Figure 3 is a flowchart showing an example of communication control by the communication control apparatus 3. "S" in the flowchart means a step or a process.

In S1, the roaming restriction area setter 31 sets the roaming restriction area RA in the PLMN2 as the roaming network, in which roaming connection is restricted during normal time and roaming connection is allowed during emergency. In S2, the roaming restriction easer 32 eases the restriction on roaming connection during normal time for a specific communication cell (the non-terrestrial communication cell NTC in the example of Figure 2) included in the roaming restriction area RA set in S1. In S3, during normal time, the restriction easing information provider 33 transmits the restriction easing information that can identify the specific communication cell for which the restriction on roaming connection during normal time has been eased in S2, from the core network of the PLMN2 as the roaming network. In S4, the core network of the PLMN1 as the home network receives the restriction easing information transmitted in S3.

In S5, the core network of the PLMN1 may notify or share some or all of the restriction easing information received in S4, to the communication device 2 being connected to such PLMN1 (e.g., the home cell HC). The communication device 2 that has received the restriction easing information in such a way, can recognize in advance the communication cell in which roaming connection is allowed in the PLMN2 as the roaming network. This effectively avoids a situation in which the communication device 2 makes unsuccessful roaming connection requests to the communication cell in which roaming connection is restricted or prohibited (e.g., the terrestrial communication cell TC during normal time). It should be noted that the core network of the PLMN1 may concretely specify the communication cell to which the roaming connection request should be made by the communication device 2, instead of notifying the communication device 2 of the restriction easing information received in S4.

In S6, the situation determiner 35 determines the current situation (i.e., normal time or emergency) in the PLMN1 as the home network. If the determination result in S7 is normal time (Yes), the flow proceeds to S8 where the core network of the PLMN1 and/or the communication device 2 recognizes, based on the restriction easing information received in S4, that roaming connection is allowed only to the specific communication cell (the non-terrestrial communication cell NTC in the example of Figure 2) for which the roaming restriction has been eased in S2.

In S10 following S8, the communication quality determiner 36 may determine the communication quality of the connectable communication cell. In the example in Figure 2, the communication cells that can be connected by the communication device 2 during normal time are the home cell HC and the non-terrestrial communication cell NTC (the terrestrial communication cell TC is not connectable during normal time under the roaming restriction set in S1). Thus, in S10, it is preferable for the communication quality determiner 36 to determine the communication quality of each of the home cell HC and the non-terrestrial communication cell NTC. As a result, if the communication quality of the home cell HC is determined to be sufficient for the communication device 2, the connection controller 34 preferentially determines the home cell HC as the connection target of the communication device 2 in S11. In a typical case, since the communication device 2 is already connected to the home cell HC, such connection state is maintained under the determination in S11.

On the other hand, if, as a result of S10, the communication quality of the home cell HC is insufficient for the communication device 2 (e.g., the communication quality in the periphery (edge) of the home cell HC tends to deteriorate due to interference with other neighboring communication cells), and also higher communication quality is realized in the non-terrestrial communication cell NTC, the connection controller 34 in S11 determines the non-terrestrial communication cell NTC as the (roaming) connection target of the communication device 2. In a typical case, since the communication device 2 is connected to the home cell HC, the switching procedure such as handover or redirection from the home cell HC to the non-terrestrial communication cell NTC is initiated under the determination in S11.

If the determination result in S7 is emergency (No), the flow proceeds to S9 where the disaster roaming and the like is triggered. As a result, regardless of the restriction easing information received in S4 for the specific communication cell (the non-terrestrial communication cell NTC in the example of Figure 2), the core network of the PLMN1 and/or the communication device 2 recognizes that roaming connection is allowed to all the communication cells (the terrestrial communication cell TC and the non-terrestrial communication cell NTC in the example of Figure 2) included in the roaming restriction area RA set in S1.

In S10 following S9, the communication quality determiner 36 may determine the communication quality of the connectable communication cell. In the example in Figure 2, the communication cells that can be connected by the communication device 2 during emergency are the home cell HC, the terrestrial communication cell TC, and the non-terrestrial communication cell NTC. Thus, in S10, it is preferable for the communication quality determiner 36 to determine the communication quality of each of the home cell HC, the terrestrial communication cell TC, and the non-terrestrial communication cell NTC. As a result, if the communication quality of the home cell HC is determined to be sufficient for the communication device 2, the connection controller 34 preferentially determines the home cell HC as the connection target of the communication device 2 in S11. In a typical case, since the communication device 2 is already connected to the home cell HC, such connection state is maintained under the determination in S11.

On the other hand, if, as a result of S10, the communication quality of the home cell HC is insufficient for the communication device 2 (e.g., if the entire PLMN1 or the home cell HC is not functioning properly due to a disaster or an emergency), and also higher communication quality is realized in the terrestrial communication cell TC and/or the non-terrestrial communication cell NTC, the connection controller 34 in S11 determines the terrestrial communication cell TC or the non-terrestrial communication cell NTC, preferably the one with higher communication quality, as the (roaming) connection target of the communication device 2. In a typical case, since the communication device 2 is connected to the home cell HC, the switching procedure such as handover or redirection from the home cell HC to the terrestrial communication cell TC or the non-terrestrial communication cell NTC is initiated under the determination in S11. Besides, if the communication device 2 has been roaming to the non-terrestrial communication cell NTC even during normal time, and also higher communication quality is realized in the newly available terrestrial communication cell TC under the disaster roaming triggered in S9, the switching procedure such as handover or redirection from the non-terrestrial communication cell NTC to the terrestrial communication cell TC may be initiated under the determination in S11.

According to the present embodiment, the restriction on roaming connection during normal time can be eased, for a specific communication cell (the non-terrestrial communication cell NTC in the example in Figure 2) included in the roaming restriction area RA in which roaming connection is restricted except during emergency.

The present disclosure has been described above based on embodiments. It is obvious to those skilled in the art that various variations are possible in the combination of each component and/or each process in the exemplary embodiments, and that such variations are also encompassed within the scope of the present disclosure.

It should be noted that the structures, the operations, and the functions of each apparatus and/or each method described in the embodiments can be realized by hardware resources or software resources, or by the cooperation of hardware resources and software resources. As hardware resources, for example, processors, ROMs, RAMs and various integrated circuits can be used. As software resources, for example, programs such as operating systems and applications can be used.

The present disclosure may be expressed as the following items.

1. A communication control apparatus comprising at least one processor that performs:
   by a roaming restriction area setter, setting a roaming restriction area in which roaming connection is restricted during normal time and roaming connection is allowed during emergency; and
   by a roaming restriction easer, easing the restriction on roaming connection during normal time for a specific communication cell included in the roaming restriction area.
2. The communication control apparatus according to item 1, wherein the roaming restriction area includes a plurality of communication cells.
3. The communication control apparatus according to item 2, wherein
   the roaming restriction area includes a terrestrial communication cell provided on the ground by a terrestrial base station installed on the ground and a non-terrestrial communication cell provided on the ground by a flying non-terrestrial base station, and
   the roaming restriction easer eases the restriction on roaming connection during normal time for the non-terrestrial communication cell included in the roaming restriction area.
4. The communication control apparatus according to item 3, wherein the non-terrestrial base station is a communication satellite flying in outer space.
5. The communication control apparatus according to any of items 1 to 4, wherein the roaming restriction easer eases the restriction on roaming connection during normal time for a communication cell included in the roaming restriction area that uses a specific radio access technology.
6. The communication control apparatus according to any of items 1 to 5, wherein the roaming restriction area setter sets the roaming restriction area in units of tracking area.
7. The communication control apparatus according to any of items 1 to 6, wherein the at least one processor performs, by a restriction easing information provider, providing restriction easing information that can identify the specific communication cell for which the restriction on roaming connection during normal time has been eased by the roaming restriction easer, to the network providing connection before roaming.
8. The communication control apparatus according to item 7, wherein the restriction easing information provider provides the restriction easing information to the network providing connection before roaming during normal time.
9. The communication control apparatus according to any of items 1 to 8, wherein
   the roaming restriction area setter sets the roaming restriction area in which roaming connection is prohibited during normal time, and
   the roaming restriction easer lifts the prohibition of roaming connection during normal time for a specific communication cell included in the roaming restriction area.
10. A communication control method performing:
   setting a roaming restriction area in which roaming connection is restricted during normal time and roaming connection is allowed during emergency; and
   easing the restriction on roaming connection during normal time for a specific communication cell included in the roaming restriction area.
11. A computer-readable medium storing a communication control program causing a computer to perform:
   setting a roaming restriction area in which roaming connection is restricted during normal time and roaming connection is allowed during emergency; and
   easing the restriction on roaming connection during normal time for a specific communication cell included in the roaming restriction area.

The application claims priority of Japanese patent application 2023-015961, filed on February 6, 2023, which is hereby incorporated by reference in its entirety.

The present disclosure relates to easing restriction on roaming connection during normal time.
1 wireless communication system, 2 communication device, 3 communication control apparatus, 11 5G wireless communication system, 12 4G wireless communication system, 13 satellite communication system, 31 roaming restriction area setter, 32 roaming restriction easer, 33 restriction easing information provider, 34 connection controller, 35 situation determiner, 36 communication quality determiner, 111 5G base station, 112 5G cell, 121 4G base station, 122 4G cell, 131 communication satellite, 132 satellite communication cell, 133 gateway.

## Claims

1. A communication control apparatus comprising at least one processor that performs:
by a roaming restriction area setter, setting a roaming restriction area in which roaming connection is restricted during normal time and roaming connection is allowed during emergency; and
by a roaming restriction easer, easing the restriction on roaming connection during normal time for a specific communication cell included in the roaming restriction area.

2. The communication control apparatus according to claim 1, wherein the roaming restriction area includes a plurality of communication cells.

3. The communication control apparatus according to claim 2, wherein
the roaming restriction area includes a terrestrial communication cell provided on the ground by a terrestrial base station installed on the ground and a non-terrestrial communication cell provided on the ground by a flying non-terrestrial base station, and
the roaming restriction easer eases the restriction on roaming connection during normal time for the non-terrestrial communication cell included in the roaming restriction area.

4. The communication control apparatus according to claim 3, wherein the non-terrestrial base station is a communication satellite flying in outer space.

5. The communication control apparatus according to claim 1, wherein the roaming restriction easer eases the restriction on roaming connection during normal time for a communication cell included in the roaming restriction area that uses a specific radio access technology.

6. The communication control apparatus according to claim 1, wherein the roaming restriction area setter sets the roaming restriction area in units of tracking area.

7. The communication control apparatus according to claim 1, wherein the at least one processor performs, by a restriction easing information provider, providing restriction easing information that can identify the specific communication cell for which the restriction on roaming connection during normal time has been eased by the roaming restriction easer, to the network providing connection before roaming.

8. The communication control apparatus according to claim 7, wherein the restriction easing information provider provides the restriction easing information to the network providing connection before roaming during normal time.

9. The communication control apparatus according to claim 1, wherein
the roaming restriction area setter sets the roaming restriction area in which roaming connection is prohibited during normal time, and
the roaming restriction easer lifts the prohibition of roaming connection during normal time for a specific communication cell included in the roaming restriction area.

10. A communication control method performing:
setting a roaming restriction area in which roaming connection is restricted during normal time and roaming connection is allowed during emergency; and
easing the restriction on roaming connection during normal time for a specific communication cell included in the roaming restriction area.

11. A computer-readable medium storing a communication control program causing a computer to perform:
setting a roaming restriction area in which roaming connection is restricted during normal time and roaming connection is allowed during emergency; and
easing the restriction on roaming connection during normal time for a specific communication cell included in the roaming restriction area.
